# EUROPÄISCHE PATENTSCHRIFT

(11) **EP 3 471 235 B1**
(45) Veröffentlichungstag und Bekanntmachung des Hinweises auf die Patenterteilung: **08.09.2021**
(21) Anmeldenummer: 18181073.0
(22) Anmeldetag: 02.07.2018
(51) Int. Cl.: H02J 7/00, B60L 53/14, H02J 50/10, B60L 53/22, B60L 53/12, B60L 53/30, H02J 7/02

(54) **ENERGIEBEREITSTELLUNGSEINRICHTUNG ZUM BEREITSTELLEN ELEKTRISCHER ENERGIE FÜR EIN KRAFTFAHRZEUG SOWIE VERFAHREN ZUM BETREIBEN EINER ENERGIEBEREITSTELLUNGSEINRICHTUNG**
ENERGY SUPPLY DEVICE FOR PROVIDING ELECTRICAL ENERGY FOR A MOTOR VEHICLE AND METHOD FOR OPERATING AN ENERGY SUPPLY DEVICE
DISPOSITIF DE FOURNITURE D'ÉNERGIE DESTINÉ À FOURNIR DE L'ÉNERGIE ÉLECTRIQUE À UN VÉHICULE AUTOMOBILE AINSI QUE PROCÉDÉ DE FONCTIONNEMENT D'UN DISPOSITIF DE FOURNITURE D'ÉNERGIE

(30) Priorität: 11.10.2017 DE 102017218165
(43) Veröffentlichungstag der Anmeldung: 17.04.2019
(73) Patentinhaber: AUDI AG, 85045 Ingolstadt (DE)
(72) Erfinder: Graßl, Tobias, 85095 Denkendorf (DE)

(56) Entgegenhaltungen:
- EP-A1- 2 657 063
- EP-A1- 2 777 129
- EP-A1- 2 782 063
- EP-A1- 2 983 267
- EP-A2- 2 572 431
- DE-A1-102009 020 504
- DE-A1-102011 017 369
- DE-A1-102013 220 548
- DE-A1-102016 102 053
- DE-T5-112012 005 145
- FR-A1- 2 985 868
- JP-A- 2013 240 206
- US-A1- 2004 189 251

## Beschreibung

Die Erfindung betrifft eine Energiebereitstellungseinrichtung zum Bereitstellen elektrischer Energie für ein Kraftfahrzeug, mit einem Netzanschluss zum Anschließen der Energiebereitstellungseinrichtung an ein Wechselstromnetz, mit mindestens einer ersten Anschlusseinrichtung zum Herstellen einer kabelgebundenen elektrischen Verbindung zwischen dem Netzanschluss und dem Kraftfahrzeug und mit mindestens einer zweiten Anschlusseinrichtung zum Herstellen einer kabellosen elektrischen Verbindung zwischen dem Netzanschluss und dem Kraftfahrzeug, wobei die erste Anschlusseinrichtung und die zweite Anschlusseinrichtung über eine gemeinsame Gleichrichtereinrichtung an den Netzanschluss angeschlossen sind, wobei die erste Anschlusseinrichtung einen Anschluss und eine an den Anschluss angeschlossene elektrische Leitung zum Herstellen der kabelgebundenen Verbindung zu dem Kraftfahrzeug und die zweite Anschlusseinrichtung einen Wechselrichter und eine über den Wechselrichter elektrisch an die Gleichrichtereinrichtung angeschlossene Drahtlosladeeinrichtung aufweist. Die Erfindung betrifft weiterhin ein Verfahren zum Betreiben einer Energiebereitstellungseinrichtung.

Die Energiebereitstellungseinrichtung dient dem Bereitstellen von elektrischer Energie für das Kraftfahrzeug. Hierzu ist die Energiebereitstellungseinrichtung über ihren Netzanschluss mit dem Wechselstromnetz verbunden, vorzugsweise einem öffentlichen Wechselstromnetz, oder zumindest verbindbar. Die Energiebereitstellungseinrichtung kann über den Netzanschluss dem Wechselstromnetz elektrische Energie entnehmen und dem Kraftfahrzeug zur Verfügung stellen beziehungsweise an das Kraftfahrzeug übertragen.

Die an das Kraftfahrzeug übertragene Energie wird beispielsweise zum Laden eines Energiespeichers des Kraftfahrzeugs, bevorzugt einer Traktionsbatterie des Kraftfahrzeugs verwendet. Unter der Traktionsbatterie ist ein Energiespeicher zu verstehen, welcher zum Betreiben eines Traktionsantriebs des Kraftfahrzeugs herangezogen wird, also einer elektrischen Maschine, mittels welcher die in der Traktionsbatterie zwischengespeicherte elektrische Energie in mechanische Energie umgewandelt werden kann, welche auf ein Antreiben des Kraftfahrzeugs gerichtet ist.

Die Energiebereitstellungseinrichtung kann die über den Netzanschluss zugeführte elektrische Energie einerseits kabelgebunden und andererseits kabellos zu dem Kraftfahrzeug übertragen. Hierzu kann die Energiebereitstellungseinrichtung wahlweise zur Herstellung der kabelgebundenen elektrischen Verbindung und/oder der kabellosen elektrischen Verbindung herangezogen werden. Zum Herstellen der kabelgebundenen elektrischen Verbindung verfügt die Energiebereitstellungseinrichtung über die erste Anschlusseinrichtung und zum Herstellen der kabellosen elektrischen Verbindung über die zweite Anschlusseinrichtung. Sowohl die erste Anschlusseinrichtung als auch die zweite Anschlusseinrichtung sind jeweils entsprechend zum Herstellen der jeweiligen elektrischen Verbindung ausgestaltet.

Aus dem Stand der Technik ist beispielsweise die Druckschrift DE 10 2010 022 727 A1 bekannt. Diese betrifft ein Ladesystem zum Laden der Traktionsbatterie eines elektrisch angetriebenen Kraftfahrzeugs, umfassend einen ersten Gleichrichter, der eingangsseitig mit einem Wechselspannungs- oder Drehstrom-Versorgungsnetz galvanisch verbindbar ist und der ausgangsseitig über einen zur Stabilisierung der erzeugten Gleichspannung vorgesehenen Zwischenkreis mit dem Eingang einer ausgangsseitig mit der Traktionsbatterie verbundenen Laderegelschaltung verbunden ist. Dabei ist vorgesehen, dass der Zwischenkreis mit dem Ausgang eines zweiten Gleichrichters verbunden ist, der eingangsseitig mit einer fahrzeugseitigen elektrischen Wicklung verbunden ist, über die elektrische Energie aus einer an einem Wechselspannungs- oder Drehstrom-Versorgungsnetz angeschlossenen Ladestation mit einer an das Kraftfahrzeug anfügbaren, eine stationäre elektrische Wicklung umfassenden Ankoppelvorrichtung induktiv auf das Kraftfahrzeug übertragen werden kann.

Die Druckschrift EP 2 572 431 A2 beschreibt ein Aufladesystem für Elektrofahrzeuge.

Außerdem zeigt die Druckschrift US 2004/189251 A1 ein modulares und rekonfiguierbares Batterieladegerät. Es umfasst modulare Ladestufen, die so konfiguriert sind, dass sie einen Wechselstromeingang empfangen und einen Gleichstromausgang zum Laden einer Batterie bereitstellen.

Weiterhin sind aus dem Stand der Technik die Druckschriften FR 2 985 868 A1, JP 2013-240206 A sowie EP 2 777 129 A1 bekannt. Diese beschreiben jeweils Ladeeinrichtungen zum Aufladen einer Batterie eines Kraftfahrzeugs.

Es ist Aufgabe der Erfindung, eine Energiebereitstellungseinrichtung zum Bereitstellen elektrischer Energie für ein Kraftfahrzeug vorzuschlagen, welche gegenüber bekannten Energiebereitstellungseinrichtungen Vorteile aufweist, insbesondere bei gleichzeitig in dem Bauraum äußerst flexibel einsetzbar ist.

Dies wird erfindungsgemäß mit einer Energiebereitstellungseinrichtung mit den Merkmalen des Anspruchs 1 erreicht. Dabei ist vorgesehen, dass die Gleichrichtereinrichtung einen ersten Gleichrichter und einen zweiten Gleichrichter aufweist, die einerseits elektrisch parallel an den Netzanschluss angeschlossen sind, wobei der erste Gleichrichter andererseits an die erste Anschlusseinrichtung und der zweite Gleichrichter andererseits an die zweite Anschlusseinrichtung elektrisch angebunden ist, und dass mittels einer Schalteinrichtung in einer ersten Betriebsart der Energiebereitstellungseinrichtung der erste Gleichrichter elektrisch mit der ersten Anschlusseinrichtung verbunden sowie von der zweiten Anschlusseinrichtung separiert und der zweite Gleichrichter elektrisch mit der zweiten Anschlusseinrichtung verbunden sowie von der ersten Anschlusseinrichtung separiert ist und in einer zweiten Betriebsart der Energiebereitstellungseinrichtung der erste Gleichrichter und der zweite Gleichrichter elektrisch parallel geschaltet und jeweils elektrisch mit der ersten Anschlusseinrichtung und der zweiten Anschlusseinrichtung verbunden sind.

Die Erfindung ist durch die Ansprüche definiert. Vorteilhafte Weiterbildungen der Erfindung ergeben sich aus den abhängigen Ansprüchen.

Grundsätzlich ist vorgesehen, dass die erste Anschlusseinrichtung und die zweite Anschlusseinrichtung über eine gemeinsame Gleichrichtereinrichtung an den Netzanschluss angeschlossen sind. Über den Netzanschluss wird der Energiebereitstellungseinrichtung Wechselstrom aus dem Wechselstromnetz bereitgestellt. Die erste Anschlusseinrichtung und die zweite Anschlusseinrichtung benötigen jedoch Gleichstrom, um dem Kraftfahrzeug elektrische Energie zur Verfügung stellen zu können. Aus diesem Grund ist die Gleichrichtereinrichtung vorgesehen, über welche die beiden Anschlusseinrichtungen, also sowohl die erste Anschlusseinrichtung als auch die zweite Anschlusseinrichtung, an den Netzanschluss der Energiebereitstellungseinrichtung angeschlossen sind. Die Gleichrichtereinrichtung dient dem Umwandeln von Wechselstrom in Gleichstrom, wobei letzterer der ersten Anschlusseinrichtung und der zweiten Anschlusseinrichtung zur Verfügung gestellt wird.

Die elektrische Energie kann nun dem Kraftfahrzeug mittels der ersten Anschlusseinrichtung, der zweiten Anschlusseinrichtung oder beiden gleichzeitig bereitgestellt werden. Es kann also vorgesehen sein, dass das Bereitstellen der elektrischen Energie für das Kraftfahrzeug allein mittels der ersten Anschlusseinrichtung oder allein mittels der zweiten Anschlusseinrichtung erfolgt. Es kann jedoch auch vorgesehen sein, dass die elektrische Energie dem Kraftfahrzeug sowohl mittels der ersten Anschlusseinrichtung als auch der zweiten Anschlusseinrichtung, also parallel, bereitgestellt wird. Ebenso kann es vorgesehen sein, mittels der ersten Anschlusseinrichtung dem Kraftfahrzeug elektrische Energie und mittels der zweiten Anschlusseinrichtung einem weiteren Kraftfahrzeug elektrische Energie zur Verfügung zu stellen.

In jedem Fall erfolgt jedoch eine Versorgung der ersten Anschlusseinrichtung und der zweiten Anschlusseinrichtung mit Gleichstrom mittels der gemeinsamen Gleichrichtereinrichtung, insbesondere ausschließlich mittels der gemeinsamen Gleichrichtereinrichtung. Aufgrund der Verwendung der gemeinsamen Gleichrichtereinrichtung für die erste Anschlusseinrichtung und die zweite Anschlusseinrichtung kann eine platzsparende Ausgestaltung der Energiebereitstellungseinrichtung realisiert sein, gleichzeitig jedoch eine hohe Flexibilität bei der Nutzung der Energiebereitstellungseinrichtung erzielt werden, weil dem Kraftfahrzeug beziehungsweise den Kraftfahrzeugen elektrische Energie sowohl kabelgebunden als auch kabellos zur Verfügung gestellt werden kann.

Die Gleichrichtereinrichtung kann unidirektional oder bidirektional ausgestaltet sein. In ersterem Fall kann mittels der Gleichrichtereinrichtung dem Wechselstromnetz elektrische Energie entnommen und den Anschlusseinrichtungen zugeführt werden. Die umgekehrte Richtung ist nicht vorgesehen. Ist hingegen die bidirektionale Ausgestaltung der Gleichrichtereinrichtung realisiert, so kann die Gleichrichtereinrichtung sowohl dem Entnehmen von elektrischer Energie aus dem Wechselstromnetz und deren Zuführung zu den Anschlusseinrichtungen dienen als auch einer Energieübertragung in umgekehrter Richtung. Das bedeutet, dass beispielsweise Energie von dem Kraftfahrzeug mittels der ersten Anschlusseinrichtung und/oder der zweiten Anschlusseinrichtung zu der Energiebereitstellungseinrichtung übertragen und von dieser über die Gleichrichtereinrichtung dem Wechselstromnetz zugeführt wird.

Aufgrund der Integration der ersten Anschlusseinrichtung und der zweiten Anschlusseinrichtung in die Energiebereitstellungseinrichtung kann es zudem vorgesehen sein, mittels einer der Anschlusseinrichtungen dem Kraftfahrzeug elektrische Energie zu entnehmen und mittels der jeweils anderen der Anschlusseinrichtungen dem weiteren Kraftfahrzeug zuzuführen. Insoweit ist ein äußerst flexibler Betrieb der Energiebereitstellungseinrichtung realisiert oder zumindest umsetzbar.

Nicht erfindungsgemäß ist eine Ausgestaltung für welche vorgesehen ist, dass die Gleichrichtereinrichtung genau einen Gleichrichter aufweist, der einerseits an den Netzanschluss angeschlossen ist und andererseits parallel an die erste Anschlusseinrichtung und die zweite Anschlusseinrichtung elektrisch angebunden ist. Der Gleichrichter dient dem Gleichrichten des dem Wechselstromnetz entnommenen Wechselstroms in Gleichstrom, welcher anschließend der ersten Anschlusseinrichtung und der zweiten Anschlusseinrichtung zur Verfügung gestellt wird. Hierzu ist der Gleichrichter eingangsseitig an den Netzanschluss angeschlossen und ausgangsseitig parallel mit der ersten Anschlusseinrichtung und der zweiten Anschlusseinrichtung verbunden.

Die der ersten Anschlusseinrichtung und der zweiten Anschlusseinrichtung in Summe zugeführte elektrische Leistung wird also über den Gleichrichter geführt. Vorzugsweise ist die Energiebereitstellungseinrichtung insoweit entsprechend angepasst. Beispielsweise ist der Gleichrichter derart ausgelegt, dass er sowohl die erste Anschlusseinrichtung als auch die zweite Anschlusseinrichtung mit einer elektrischen Leistung versorgen kann, welche der Summe der Nennleistungen der beiden Anschlusseinrichtungen entspricht.

Ist dies nicht der Fall, ist also die Nennleistung des Gleichrichters kleiner als die Summe der Nennleistungen der beiden Anschlusseinrichtungen, so ist die Energiebereitstellungseinrichtung bevorzugt derart ausgestaltet, dass entweder jeweils lediglich eine der beiden Anschlusseinrichtungen betreibbar ist, oder dass die Istleistung wenigstens einer der beiden Anschlusseinrichtungen derart eingestellt wird, dass sie kleiner ist als die jeweilige Nennleistung.

In ersterem Fall wird also beispielsweise die zweite Anschlusseinrichtung stillgelegt, wenn dem Kraftfahrzeug mittels der ersten Anschlusseinrichtung elektrische Energie zugeführt wird. Umgekehrt wird die erste Anschlusseinrichtung stillgelegt, wenn dem Kraftfahrzeug mittels der zweiten Anschlusseinrichtung elektrische Energie zugeführt wird. Anstelle des Stilllegens kann auch jeweils eine Reduzierung der Istleistung der entsprechenden Anschlusseinrichtung vorgesehen sein, nämlich bevorzugt derart, dass die Summe der Istleistungen der beiden Anschlusseinrichtungen der Nennleistung des Gleichrichters beziehungsweise der Gleichrichtereinrichtung entspricht.

Gemäß der Erfindung ist vorgesehen, dass die Gleichrichtereinrichtung einen ersten Gleichrichter und einen zweiten Gleichrichter aufweist, die einerseits elektrisch parallel an den Netzanschluss angeschlossen sind, wobei der erste Gleichrichter andererseits an die erste Anschlusseinrichtung und der zweite Gleichrichter andererseits an die zweite Anschlusseinrichtung elektrisch angebunden ist. Im Unterschied zu der vorstehend beschriebenen Ausgestaltung sind also anstelle des einen Gleichrichters mehrere Gleichrichter, nämlich der erste Gleichrichter und der zweite Gleichrichter, vorgesehen. Die beiden Gleichrichter sind einerseits, also eingangsseitig, elektrisch parallel an dem Netzanschluss angeschlossen. Andererseits, also ausgangsseitig, ist der erste Gleichrichter zumindest an die erste Anschlusseinrichtung und der zweite Gleichrichter zumindest an die zweite Anschlusseinrichtung elektrisch angeschlossen.

Vorzugsweise sind die beiden Gleichrichter derart ausgestaltet, dass sie einen Betrieb der jeweiligen Anschlusseinrichtung bei ihrer Nennleistung ermöglichen. Insoweit entspricht bevorzugt die Nennleistung des ersten Gleichrichters der Nennleistung der ersten Anschlusseinrichtung und die Nennleistung des zweiten Gleichrichters der Nennleistung der zweiten Anschlusseinrichtung. Selbstverständlich kann es jedoch auch hier vorgesehen sein, die Istleistung wenigstens einer der Anschlusseinrichtung oder beider Anschlusseinrichtungen zu reduzieren, falls dies notwendig sein sollte, beispielsweise falls die von dem Wechselstromnetz bereitstellbare Leistung oder die über den Netzanschluss aus dem Wechselstromnetz entnehmbare Leistung nicht ausreicht, um beide Anschlusseinrichtungen jeweils mit ihrer Nennleistung zu betreiben.

In einer besonders bevorzugten Ausgestaltung ist vorgesehen, dass die Gleichrichtereinrichtung eine Schalteinrichtung aufweist, mittels welcher die beiden Gleichrichter ausgangsseitig miteinander koppelbar sind. In einer ersten Schaltstellung der Schalteinrichtung ist also der erste Gleichrichter an die erste Anschlusseinrichtung angeschlossen und elektrisch von der zweiten Anschlusseinrichtung separiert, wohingegen der zweite Gleichrichter an die zweite Anschlusseinrichtung angeschlossen und elektrisch von der ersten Anschlusseinrichtung separiert ist. In einer zweiten Schaltstellung der Schalteinrichtung sind dagegen der erste Gleichrichter und der zweite Gleichrichter jeweils sowohl mit der ersten Anschlusseinrichtung als auch der zweiten Anschlusseinrichtung elektrisch verbunden.

Die Erfindung sieht zudem vor, dass in einer ersten Betriebsart der Energiebereitstellungseinrichtung der erste Gleichrichter elektrisch mit der ersten Anschlusseinrichtung verbunden sowie von der zweiten Anschlusseinrichtung separiert und der zweite Gleichrichter elektrisch mit der zweiten Anschlusseinrichtung verbunden sowie von der ersten Anschlusseinrichtung separiert ist, wobei in einer zweiten Betriebsart der Energiebereitstellungseinrichtung der erste Gleichrichter und der zweite Gleichrichter elektrisch parallel geschaltet und jeweils mit der ersten Anschlusseinrichtung und der zweiten Anschlusseinrichtung verbunden sind. Hierauf wurde vorstehend bereits hingewiesen. Die beiden Betriebsarten können beispielsweise mittels der erwähnten Schalteinrichtung realisiert sein, wobei in der ersten Betriebsart die erste Schaltstellung und in der zweiten Betriebsart die zweite Schaltstellung an der Schalteinrichtung eingestellt ist.

Eine Weiterbildung der Erfindung sieht vor, dass die erste Anschlusseinrichtung einen Anschluss zum Anschließen einer zum Herstellen der kabelgebundenen Verbindung zu dem Kraftfahrzeug vorgesehenen elektrischen Leitung und/oder die an den Anschluss angeschlossene elektrische Leitung aufweist. Über die erste Anschlusseinrichtung ist die kabelgebundene Verbindung zu dem Kraftfahrzeug herstellbar oder hergestellt. Hierzu ist der Energiebereitstellungseinrichtung zumindest der Anschluss zum Anschließen der elektrischen Leitung zugeordnet, über welchen die elektrische Verbindung zu dem Kraftfahrzeug schlussendlich vorliegt. Der Anschluss ist beispielsweise ein Steckanschluss, welcher eine Steckverbindung bereitstellt, über welche die elektrische Leitung mit dem ersten Gleichrichter elektrisch verbindbar ist.

Selbstverständlich kann zusätzlich die elektrische Leitung Bestandteil der ersten Anschlusseinrichtung sein. Ebenso kann es vorgesehen sein, dass die elektrische Leitung permanent und unlösbar, also zumindest nicht zerstörungsfrei lösbar, mit dem ersten Gleichrichter elektrisch verbunden ist. In diesem Fall liegt beispielsweise lediglich die elektrische Leitung, nicht jedoch der Anschluss beziehungsweise Steckanschluss vor. Der Steckanschluss ist beispielsweise an einem Gehäuse der Energiebereitstellungseinrichtung derart angeordnet, dass die Steckverbindung zu der elektrischen Leitung auf einfache Art und Weise herstellbar ist. Dies ermöglicht eine äußerst flexible Nutzung der Energiebereitstellungseinrichtung.

Eine weitere bevorzugte Ausgestaltung der Erfindung sieht vor, dass die zweite Anschlusseinrichtung einen Wechselrichter und eine über den Wechselrichter elektrisch an die Gleichrichtereinrichtung angeschlossene Drahtlosladeeinrichtung aufweist. Der Wechselrichter dient dem Umsetzen des von der Gleichrichtereinrichtung bereitgestellten Gleichstroms in einen Wechselstrom. Der Wechselstrom wiederum wird der Drahtlosladeeinrichtung zugeführt. Die Drahtlosladeeinrichtung liegt beispielsweise in Form einer oder mehrerer Spulen vor.

Mittels der Energiebereitstellungseinrichtung wird also zum kabellosen Bereitstellen der elektrischen Energie für das Kraftfahrzeug der aus dem Wechselstromnetz entnommene Wechselstrom zunächst mittels der Gleichrichtereinrichtung in Gleichstrom umgesetzt. Anschließend wird dieser Gleichstrom wieder in Wechselstrom umgesetzt, nämlich mittels des Wechselrichters. Hierbei wird die Frequenz des Wechselstroms an die Anforderungen der Drahtlosladeeinrichtung umgesetzt. Insbesondere ist die Frequenz des mittels des Wechselrichters bereitgestellten Wechselstroms deutlich höher als die Frequenz des über den Netzanschluss aus dem Wechselstromnetz entnommenen Wechselstroms. Insoweit ist auf vorteilhafte Art und Weise ein flexibler Betrieb der Energiebereitstellungseinrichtung möglich.

Eine weitere bevorzugte Ausgestaltung der Erfindung sieht vor, dass die Gleichrichtereinrichtung und der Anschluss der ersten Anschlusseinrichtung in einem gemeinsamen Gehäuse der Energiebereitstellungseinrichtung angeordnet sind. Das gemeinsame Gehäuse ist beispielsweise für eine Wandmontage vorbereitet, kann jedoch auch an anderer geeigneter Stelle angeordnet werden. Durch die Anordnung der (gemeinsamen) Gleichrichtereinrichtung und des Anschlusses in dem Gehäuse wird eine besonders kompakte Ausführungsform der Energiebereitstellungseinrichtung realisiert.

Eine weitere Ausführungsform der Erfindung sieht vor, dass der Wechselrichter in dem Gehäuse angeordnet ist und über eine zumindest teilweise außerhalb des Gehäuses verlaufende elektrische Verbindung elektrisch mit der Drahtlosladeeinrichtung verbunden ist. Der Wechselrichter und die Drahtlosladeeinrichtung sind also separat voneinander angeordnet, nämlich der Wechselrichter in dem Gehäuse und die Drahtlosladeeinrichtung außerhalb des Gehäuses. Mit der Anordnung des Wechselrichters in dem Gehäuse, insbesondere zusätzlich zu der Gleichrichtereinrichtung und dem Anschluss der ersten Anschlusseinrichtung, wird ein besonders hoher Integrationsgrad der Energiebereitstellungseinrichtung ermöglicht, wobei lediglich ein geringer Teil derselben, nämlich die Drahtlosladeeinrichtung, außerhalb des Gehäuses vorliegt. Die Energiebereitstellungseinrichtung ist daher auch bei beengten Raumverhältnissen ohne weiteres einsetzbar.

Schließlich kann im Rahmen einer weiteren bevorzugten Ausführungsform der Erfindung vorgesehen sein, dass der Wechselrichter und die Drahtlosladeeinrichtung als außerhalb des Gehäuses angeordnete gemeinsame Baueinheit ausgebildet sind, wobei der Wechselrichter über eine zumindest teilweise außerhalb des Gehäuses verlaufende elektrische Verbindung elektrisch mit der Gleichrichtereinrichtung verbunden ist. Im Unterschied zu der vorstehend beschriebenen Ausgestaltung, bei welcher der Wechselrichter in dem Gehäuse angeordnet ist, sollen nun der Wechselrichter und die Drahtloseinrichtung beide außerhalb des Gehäuses vorliegen. Hierbei bilden sie die gemeinsame Baueinheit.

Der Wechselrichter ist nun über die elektrische Verbindung mit der in dem Gehäuse angeordneten Gleichrichtereinrichtung elektrisch verbunden. Dies hat den Vorteil, dass der Wechselrichter und die Drahtlosladeeinrichtung gemeinsam unabhängig von weiteren Elementen der Energiebereitstellungseinrichtung austauschbar sind. Ein derartiger Austausch kann beispielsweise notwendig sein, wenn das Kraftfahrzeug gegen ein anderes Kraftfahrzeug ausgetauscht wird, welches eine andere Drahtlosladeeinrichtung und/oder einen anderen Wechselrichter, beispielsweise mit einer anderen Frequenz, benötigt als das Kraftfahrzeug. Die elektrische Verbindung, über die der Wechselrichter mit der Gleichrichtereinrichtung verbunden beziehungsweise an diese angeschlossen ist, verläuft zumindest teilweise, vorzugsweise vollständig, außerhalb des Gehäuses.

Die Erfindung betrifft weiterhin ein Verfahren zum Betreiben einer Energiebereitstellungseinrichtung zum Bereitstellen elektrischer Energie für ein Kraftfahrzeug, insbesondere einer Energiebereitstellungseinrichtung gemäß den vorstehenden Ausführungen, wobei die Energiebereitstellungseinrichtung über einen Netzanschluss zum Anschließen der Energiebereitstellungseinrichtung an ein Wechselstromnetz, über mindestens eine erste Anschlusseinrichtung zum Herstellen einer kabelgebundenen elektrischen Verbindung zwischen dem Netzanschluss und dem Kraftfahrzeug und über mindestens eine zweite Anschlusseinrichtung zum Herstellen einer kabellosen elektrischen Verbindung zwischen dem Netzanschluss und dem Kraftfahrzeug verfügt. Dabei ist vorgesehen, dass die erste Anschlusseinrichtung und die zweite Anschlusseinrichtung über eine gemeinsame Gleichrichtereinrichtung an den Netzanschluss angeschlossen sind, wobei die erste Anschlusseinrichtung einen Anschluss und eine an den Anschluss angeschlossene elektrische Leitung zum Herstellen der kabelgebundenen Verbindung zu dem Kraftfahrzeug und die zweite Anschlusseinrichtung einen Wechselrichter und eine über den Wechselrichter elektrisch an die Gleichrichtereinrichtung angeschlossene Drahtlosladeeinrichtung aufweist. Weiterhin ist vorgesehen, dass die Gleichrichtereinrichtung einen ersten Gleichrichter und einen zweiten Gleichrichter aufweist, die einerseits elektrisch parallel an den Netzanschluss angeschlossen sind, wobei der erste Gleichrichter andererseits an die erste Anschlusseinrichtung und der zweite Gleichrichter andererseits an die zweite Anschlusseinrichtung elektrisch angebunden ist, und dass mittels einer Schalteinrichtung in einer ersten Betriebsart der Energiebereitstellungseinrichtung der erste Gleichrichter elektrisch mit der ersten Anschlusseinrichtung verbunden sowie von der zweiten Anschlusseinrichtung separiert und der zweite Gleichrichter elektrisch mit der zweiten Anschlusseinrichtung verbunden sowie von der ersten Anschlusseinrichtung separiert wird und in einer zweiten Betriebsart der Energiebereitstellungseinrichtung der erste Gleichrichter und der zweite Gleichrichter elektrisch parallel geschaltet und jeweils elektrisch mit der ersten Anschlusseinrichtung und der zweiten Anschlusseinrichtung verbunden werden.

Auf die Vorteile einer derartigen Ausgestaltung der Energiebereitstellungseinrichtung beziehungsweise einer derartigen Vorgehensweise wurde bereits hingewiesen. Sowohl die Energiebereitstellungseinrichtung als auch das Verfahren zu ihrem Betreiben können gemäß den vorstehenden Ausführungen weitergebildet sein, sodass insoweit auf diese verwiesen wird.

Gemäß der Erfindung ist es beispielsweise vorgesehen, aus den vorstehend erwähnten Betriebsarten, also der ersten Betriebsart und der zweiten Betriebsart, eine geeignete Betriebsart auszuwählen und an der Gleichrichtereinrichtung einzustellen. Hierzu ist es insbesondere vorgesehen, die Schalteinrichtung, welche ebenfalls bereits erwähnt wurde, entsprechend einzustellen. Dies ermöglicht ein besonders flexibles Betreiben der Energiebereitstellungseinrichtung.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung einer Energiebereitstellungseinrichtung in einer ersten Ausführungsform,
- Figur 2: eine schematische Darstellung der Energiebereitstellungseinrichtung in einer nicht erfindungsgemäßen zweiten Ausführungsform, sowie
- Figur 3: eine schematische Darstellung der Energiebereitstellungseinrichtung in einer nicht erfindungsgemäßen dritten Ausführungsform.

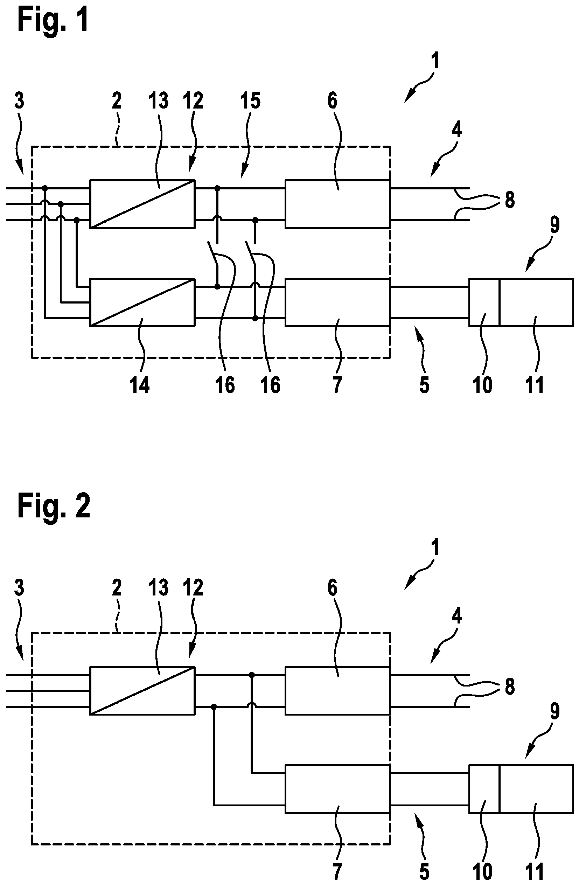

Die Figur 1 zeigt eine schematische Darstellung einer Energiebereitstellungseinrichtung 1, die zum Bereitstellen elektrischer Energie für ein nicht näher dargestelltes Kraftfahrzeug vorgesehen und ausgebildet ist. Die Energiebereitstellungseinrichtung 1 verfügt über ein Gehäuse 2, in welchem wesentliche Komponenten angeordnet sind. Weiterhin weist die Energiebereitstellungseinrichtung 1 einen Netzanschluss 3 zum Anschließen der Energiebereitstellungseinrichtung 1 an ein Wechselstromnetz, vorzugsweise ein öffentliches Wechselstromnetz auf. In dem hier dargestellten Ausführungsbeispiel ist der Netzanschluss 3 dreiphasig ausgeführt.

Weiterhin verfügt die Energiebereitstellungseinrichtung 1 über eine erste Anschlusseinrichtung 4 und eine zweite Anschlusseinrichtung 5. Die erste Anschlusseinrichtung 4 ist zum Herstellen einer kabelgebundenen elektrischen Verbindung zwischen dem Netzanschluss 3 und dem Kraftfahrzeug vorgesehen und ausgebildet, wohingegen die zweite Anschlusseinrichtung 5 zum Herstellen einer kabellosen elektrischen Verbindung zwischen dem Netzanschluss 3 und dem Kraftfahrzeug vorgesehen und ausgebildet ist. Die erste Anschlusseinrichtung 4 weist einen ersten Anschluss 6 und die zweite Anschlusseinrichtung 5 einen zweiten Anschluss 7 auf. Der erste Anschluss 6 und - optional - auch der zweite Anschluss 7 sind bevorzugt jeweils als Steckanschluss ausgebildet.

An den Anschluss 6 ist eine elektrische Leitung 8 angeschlossen über welche schlussendlich die elektrische Verbindung zu dem Kraftfahrzeug herstellbar ist. Die zweite Anschlusseinrichtung 5 weist eine an den zweiten Anschluss 7 angeschlossene Baueinheit 9 auf, in der ein Wechselrichter 10 und eine Drahtlosladeeinrichtung 11 vorliegen. Die Drahtlosladeeinrichtung 11 ist beispielsweise als Spule ausgebildet und über den Wechselrichter 10 an dem zweiten Anschluss 7 angeschlossen.

Die erste Anschlusseinrichtung 4 und die zweite Anschlusseinrichtung 5 sind über eine gemeinsame Gleichrichtereinrichtung 12 an den Netzanschluss 3 angeschlossen. In dem hier dargestellten Ausführungsbeispiel verfügt die Gleichrichtereinrichtung 12 über einen ersten Gleichrichter 13 und einen zweiten Gleichrichter 14. Beide Gleichrichter 13 und 14 sind einerseits an den Netzanschluss 3 angeschlossen. Andererseits ist der erste Gleichrichter 13 zumindest an die erste Anschlusseinrichtung 4 und der zweite Gleichrichter 14 zumindest an die zweite Anschlusseinrichtung 5 angeschlossen beziehungsweise jeweils an den entsprechenden Anschluss 6 beziehungsweise 7.

Zudem liegt eine Schalteinrichtung 15 vor, welche mindestens einen Schalter 16, in dem hier dargestellten Ausführungsbeispiel zwei Schalter 16, aufweist. Mittels der Schalteinrichtung 15 sind die Gleichrichter 13 und 14 ausgangsseitig elektrisch miteinander verbindbar. Das bedeutet, dass die Gleichrichter 13 und 14 jeweils an beide Anschlusseinrichtungen 4 und 5 beziehungsweise die entsprechenden Anschlüsse 6 und 7 angeschlossen sind.

Hierbei ist es vorgesehen, dass in einer ersten Schaltstellung der Schalteinrichtung 15 der erste Gleichrichter 13 an die erste Anschlusseinrichtung 4 angeschlossen und von der zweiten Anschlusseinrichtung 5 elektrisch getrennt ist. Zudem ist der zweite Gleichrichter 14 elektrisch mit der zweiten Anschlusseinrichtung 5 verbunden und von der ersten Anschlusseinrichtung 4 elektrisch getrennt. In einer zweiten Schaltstellung der Schalteinrichtung 15 sind hingegen die beiden Gleichrichter 13 und 14 ausgangsseitig miteinander gekoppelt und somit jeweils sowohl mit der ersten Anschlusseinrichtung 4 als auch der zweiten Anschlusseinrichtung 5 elektrisch verbunden.

Die Figur 2 zeigt die Energiebereitstellungseinrichtung 1 in einer nicht erfindungsgemäßen zweiten Ausführungsform. Diese ist grundsätzlich ähnlich zu der ersten Ausführungsform ausgestaltet, sodass auf die vorstehenden Ausführungen Bezug genommen und nachfolgend lediglich auf die Unterschiede eingegangen wird. Diese liegen darin, dass die Gleichrichtereinrichtung 12 lediglich den Gleichrichter 13, nicht jedoch den zweiten Gleichrichter 14 aufweist. Auch entfällt die Schalteinrichtung 15 mit den Schaltern 16. Stattdessen sind die Anschlusseinrichtungen 4 und 5 beziehungsweise die Anschlüsse 6 und 7 stets parallel an die Gleichrichtereinrichtung 12 beziehungsweise den Gleichrichter 13 angeschlossen.

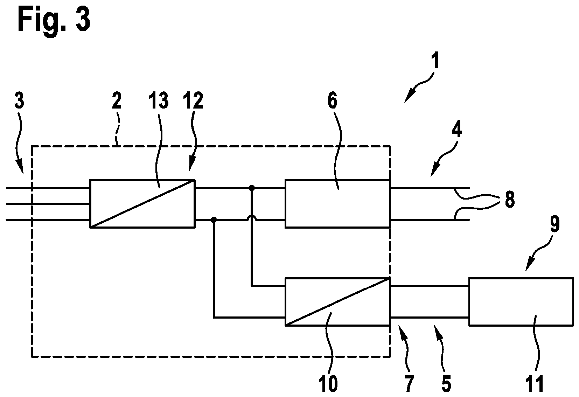

Die Figur 3 zeigt eine nicht erfindungsgemäße dritte Ausführungsform der Energiebereitstellungseinrichtung 1. Diese ist im Wesentlichen analog zu der zweiten Ausführungsform ausgestaltet, sodass auf die entsprechenden Ausführungen verwiesen und nachfolgend lediglich auf die Unterschiede eingegangen wird. Diese liegen darin, dass nun auch der Wechselrichter 10 in dem Gehäuse 2 angeordnet ist, wobei die Drahtlosladeeinrichtung 11 weiterhin außerhalb des Gehäuses 2 vorliegt. Beispielsweise ist die Drahtlosladeeinrichtung 11 über den zweiten Anschluss 7 mit dem Wechselrichter 10 elektrisch verbunden oder zumindest elektrisch verbindbar.

Die beschriebenen Ausgestaltungen der Energiebereitstellungseinrichtung 1 haben den Vorteil, dass ein hoher Integrationsgrad der Energiebereitstellungseinrichtung 1 erzielt wird, indem die Anschlusseinrichtungen 4 und 5 über die gemeinsame Gleichrichtereinrichtung 12 mit elektrischem Strom versorgt werden. Zudem sind die wesentlichen Komponenten der Energiebereitstellungseinrichtung 1 in dem gemeinsamen Gehäuse 2 angeordnet.

## Patentansprüche

1. Energiebereitstellungseinrichtung (1) zum Bereitstellen elektrischer Energie für ein Kraftfahrzeug, mit einem Netzanschluss (3) zum Anschließen der Energiebereitstellungseinrichtung (1) an ein Wechselstromnetz, mit mindestens einer ersten Anschlusseinrichtung (4) zum Herstellen einer kabelgebundenen elektrischen Verbindung zwischen dem Netzanschluss (3) und dem Kraftfahrzeug und mit mindestens einer zweiten Anschlusseinrichtung (5) zum Herstellen einer kabellosen elektrischen Verbindung zwischen dem Netzanschluss (3) und dem Kraftfahrzeug, wobei die erste Anschlusseinrichtung (4) und die zweite Anschlusseinrichtung (5) über eine gemeinsame Gleichrichtereinrichtung (12) an den Netzanschluss (3) angeschlossen sind, wobei die erste Anschlusseinrichtung (4) einen Anschluss (6) und eine an den Anschluss (6) angeschlossene elektrische Leitung (8) zum Herstellen der kabelgebundenen Verbindung zu dem Kraftfahrzeug und die zweite Anschlusseinrichtung (5) einen Wechselrichter (10) und eine über den Wechselrichter (10) elektrisch an die Gleichrichtereinrichtung (12) angeschlossene Drahtlosladeeinrichtung (11) aufweist, **dadurch gekennzeichnet, dass** die Gleichrichtereinrichtung (12) einen ersten Gleichrichter (13) und einen zweiten Gleichrichter (14) aufweist, die einerseits elektrisch parallel an den Netzanschluss (3) angeschlossen sind, wobei der erste Gleichrichter (13) andererseits an die erste Anschlusseinrichtung (4) und der zweite Gleichrichter (14) andererseits an die zweite Anschlusseinrichtung (5) elektrisch angebunden ist, und dass mittels einer Schalteinrichtung (15) in einer ersten Betriebsart der Energiebereitstellungseinrichtung (1) der erste Gleichrichter (13) elektrisch mit der ersten Anschlusseinrichtung (4) verbunden sowie von der zweiten Anschlusseinrichtung (5) separiert und der zweite Gleichrichter (14) elektrisch mit der zweiten Anschlusseinrichtung (5) verbunden sowie von der ersten Anschlusseinrichtung (4) separiert ist und in einer zweiten Betriebsart der Energiebereitstellungseinrichtung (1) der erste Gleichrichter (13) und der zweite Gleichrichter (14) elektrisch parallel geschaltet und jeweils elektrisch mit der ersten Anschlusseinrichtung (4) und der zweiten Anschlusseinrichtung (5) verbunden sind.

2. Energiebereitstellungseinrichtung nach Anspruch 1, **dadurch gekennzeichnet, dass** die Gleichrichtereinrichtung (12) und der Anschluss (6) der ersten Anschlusseinrichtung (4) in einem gemeinsamen Gehäuse (2) der Energiebereitstellungseinrichtung (1) angeordnet sind.

3. Energiebereitstellungseinrichtung nach Anspruch 2,
**dadurch gekennzeichnet, dass** der Wechselrichter (10) in dem Gehäuse (2) angeordnet ist und über eine zumindest teilweise außerhalb des Gehäuses (2) verlaufende elektrische Verbindung elektrisch mit der Drahtlosladeeinrichtung (11) verbunden ist.

4. Energiebereitstellungseinrichtung nach Anspruch 2,
**dadurch gekennzeichnet, dass** der Wechselrichter (10) und die Drahtlosladeeinrichtung (11) als außerhalb des Gehäuses (2) angeordnete gemeinsame Baueinheit (9) ausgebildet sind, wobei der Wechselrichter (10) über eine zumindest teilweise außerhalb des Gehäuses (2) verlaufende elektrische Verbindung elektrisch mit der Gleichrichtereinrichtung (12) verbunden ist.

5. Verfahren zum Betreiben einer Energiebereitstellungseinrichtung (1) nach einem oder mehreren der vorhergehenden Ansprüche zum Bereitstellen elektrischer Energie für ein Kraftfahrzeug, wobei die Energiebereitstellungseinrichtung (1) über einen Netzanschluss (3) zum Anschließen der Energiebereitstellungseinrichtung (1) an ein Wechselstromnetz, über mindestens eine erste Anschlusseinrichtung (4) zum Herstellen einer kabelgebundenen elektrischen Verbindung zwischen dem Netzanschluss (3) und dem Kraftfahrzeug und über mindestens eine zweite Anschlusseinrichtung (5) zum Herstellen einer kabellosen elektrischen Verbindung zwischen dem Netzanschluss (3) und dem Kraftfahrzeug verfügt, wobei die erste Anschlusseinrichtung (4) und die zweite Anschlusseinrichtung (5) über eine gemeinsame Gleichrichtereinrichtung (12) an den Netzanschluss (3) angeschlossen sind, wobei die erste Anschlusseinrichtung (4) einen Anschluss (6) und eine an den Anschluss (6) angeschlossene elektrische Leitung (8) zum Herstellen der kabelgebundenen Verbindung zu dem Kraftfahrzeug und die zweite Anschlusseinrichtung (5) einen Wechselrichter (10) und eine über den Wechselrichter (10) elektrisch an die Gleichrichtereinrichtung (12) angeschlossene Drahtlosladeeinrichtung (11) aufweist, **dadurch gekennzeichnet, dass** die Gleichrichtereinrichtung (12) einen ersten Gleichrichter (13) und einen zweiten Gleichrichter (14) aufweist, die einerseits elektrisch parallel an den Netzanschluss (3) angeschlossen sind, wobei der erste Gleichrichter (13) andererseits an die erste Anschlusseinrichtung (4) und der zweite Gleichrichter (14) andererseits an die zweite Anschlusseinrichtung (5) elektrisch angebunden ist, und dass mittels einer Schalteinrichtung (15) in einer ersten Betriebsart der Energiebereitstellungseinrichtung (1) der erste Gleichrichter (13) elektrisch mit der ersten Anschlusseinrichtung (4) verbunden sowie von der zweiten Anschlusseinrichtung (5) separiert und der zweite Gleichrichter (14) elektrisch mit der zweiten Anschlusseinrichtung (5) verbunden sowie von der ersten Anschlusseinrichtung (4) separiert wird und in einer zweiten Betriebsart der Energiebereitstellungseinrichtung (1) der erste Gleichrichter (13) und der zweite Gleichrichter (14) elektrisch parallel geschaltet und jeweils elektrisch mit der ersten Anschlusseinrichtung (4) und der zweiten Anschlusseinrichtung (5) verbunden werden.

## Claims

1. Energy supply apparatus (1) for supplying electrical energy for a motor vehicle, having a power grid connector (3) for connection of the energy supply apparatus (1) to an alternating current power grid, having at least one first connecting apparatus (4) for producing a cabled electrical connection between the power grid connector (3) and the motor vehicle, and having at least one second connecting apparatus (5) for producing a cableless electrical connection between the power grid connector (3) and the motor vehicle, wherein the first connecting apparatus (4) and the second connecting apparatus (5) are connected to the power grid connector (3) by way of a common rectifier apparatus (12), wherein the first connecting apparatus (4) has a terminal (6) and a power cable (8) connected to the terminal (6) for producing the cabled connection to the motor vehicle, and the second connecting apparatus (5) has an inverter (10) and a wireless charging apparatus (11) that is electrically connected to the rectifier apparatus (12) via the inverter (10), **characterised in that** the rectifier apparatus (12) has a first rectifier (13) and a second rectifier (14), which, on the one hand, are electrically connected in parallel to the power grid connector (3), wherein the first rectifier (13) is electrically linked, on the other hand, to the first connecting apparatus (4), and the second rectifier (14) is electrically linked, on the other hand, to the second connecting apparatus (5), and **in that**, by means of a switching apparatus (15), in a first operating mode of the energy supply apparatus (1), the first rectifier (13) is electrically connected to the first connecting apparatus (4) and is separated from the second connecting apparatus (5), and the second rectifier (14) is electrically connected to the second connecting apparatus (5) and is separated from the first connecting apparatus (4), and in a second operating mode of the energy supply apparatus (1), the first rectifier (13) and the second rectifier (14) are electrically connected in parallel and are each electrically connected to the first connecting apparatus (4) and the second connecting apparatus (5).

2. Energy supply apparatus according to claim 1, **characterised in that** the rectifier apparatus (12) and the terminal (6) of the first connecting apparatus (4) are arranged in a common housing (2) of the energy supply apparatus (1).

3. Energy supply apparatus according to claim 2, **characterised in that** the inverter (10) is arranged in the housing (2) and is electrically connected to the wireless charging apparatus (11) by way of an electrical connection that extends at least partially outside of the housing (2).

4. Energy supply apparatus according to claim 2, **characterised in that** the inverter (10) and the wireless charging apparatus (11) are designed as a common structural unit (9) arranged outside of the housing (2), wherein the inverter (10) is electrically connected to the rectifier apparatus (12) by way of an electrical connection that extends at least partially outside of the housing (2).

5. Method for operating an energy supply apparatus (1) according to one or more of the preceding claims to supply electrical energy for a motor vehicle, wherein the energy supply apparatus (1) has a power grid connector (3) for connection of the energy supply apparatus (1) to an alternating current power grid, has at least one first connecting apparatus (4) for producing a cabled electrical connection between the power grid connector (3) and the motor vehicle, and has at least one second connecting apparatus (5) for producing a cableless electrical connection between the power grid connector (3) and the motor vehicle, wherein the first connecting apparatus (4) and the second connecting apparatus (5) are connected to the power grid connector (3) by way of a common rectifier apparatus (12), wherein the first connecting apparatus (4) has a terminal (6) and a power cable (8) connected to the terminal (6) for producing the cabled connection to the motor vehicle, and the second connecting apparatus (5) has an inverter (10) and a wireless charging apparatus (11) that is electrically connected to the rectifier apparatus (12) via the inverter (10), **characterised in that** the rectifier apparatus (12) has a first rectifier (13) and a second rectifier (14), which, on the one hand, are electrically connected in parallel to the power grid connector (3), wherein the first rectifier (13) is electrically linked, on the other hand, to the first connecting apparatus (4), and the second rectifier (14) is electrically linked, on the other hand, to the second connecting apparatus (5), and **in that**, by means of a switching apparatus (15), in a first operating mode of the energy supply apparatus (1), the first rectifier (13) is electrically connected to the first connecting apparatus (4) and is separated from the second connecting apparatus (5), and the second rectifier (14) is electrically connected to the second connecting apparatus (5) and is separated from the first connecting apparatus (4), and in a second operating mode of the energy supply apparatus (1), the first rectifier (13) and the second rectifier (14) are electrically connected in parallel and are each electrically connected to the first connecting apparatus (4) and the second connecting apparatus (5).

## Revendications

1. Dispositif de fourniture d'énergie (1) destiné à fournir de l'énergie électrique à un véhicule automobile, avec un raccordement au réseau (3) pour le raccordement du dispositif de fourniture d'énergie (1) à un réseau de courant alternatif, avec au moins un premier dispositif de raccordement (4) destiné à établir une connexion électrique filaire entre le raccordement au réseau (3) et le véhicule automobile et avec au moins un second dispositif de raccordement (5) destiné à établir une connexion électrique sans fil entre le raccordement au réseau (3) et le véhicule automobile, dans lequel le premier dispositif de raccordement (4) et le second dispositif de raccordement (5) sont connectés au raccordement au réseau (3) par l'intermédiaire d'un dispositif redresseur commun (12), dans lequel le premier dispositif de raccordement (4) présente un raccord (6) et un câble électrique (8) connecté au raccord (6) destiné à établir la connexion filaire avec le véhicule automobile, et le second dispositif de raccordement (5) présente un onduleur (10) et un dispositif de charge sans fil (11) connecté électriquement au dispositif redresseur (12) par l'intermédiaire de l'onduleur (10), **caractérisé en ce que** le dispositif redresseur (12) présente un premier redresseur (13) et un second redresseur (14) qui sont connectés électriquement en parallèle au raccordement au réseau (3) d'une part, dans lequel le premier redresseur (13) est connecté électriquement au premier dispositif de raccordement (4) d'autre part, et le second redresseur (14) est connecté électriquement au second dispositif de raccordement (5) d'autre part, et **en ce que**, au moyen d'un dispositif de commutation (15), dans un premier mode de fonctionnement du dispositif de fourniture d'énergie (1), le premier redresseur (13) est connecté électriquement au premier dispositif de raccordement (4) ainsi que séparé du second dispositif de raccordement (5) et le second redresseur (14) est connecté électriquement au second dispositif de raccordement (5) ainsi que séparé du premier dispositif de raccordement (4) et, dans un second mode de fonctionnement du dispositif de fourniture d'énergie (1), le premier redresseur (13) et le second redresseur (14) sont connectés électriquement en parallèle et respectivement connectés électriquement au premier dispositif de raccordement (4) et au second dispositif de raccordement (5).

2. Dispositif de fourniture d'énergie selon la revendication 1, **caractérisé en ce que** le dispositif redresseur (12) et le raccord (6) du premier dispositif de raccordement (4) sont disposés dans un boîtier commun (2) du dispositif de fourniture d'énergie (1).

3. Dispositif de fourniture d'énergie selon la revendication 2, **caractérisé en ce que** l'onduleur (10) est disposé dans le boîtier (2) et est connecté électriquement au dispositif de charge sans fil (11) par une connexion électrique s'étendant au moins partiellement hors du boîtier (2).

4. Dispositif de fourniture d'énergie selon la revendication 2, **caractérisé en ce que** l'onduleur (10) et le dispositif de charge sans fil (11) sont réalisés en tant qu'unité structurelle commune (9) disposée hors du boîtier (2), dans lequel l'onduleur (10) est connecté électriquement au dispositif redresseur (12) par une connexion électrique s'étendant au moins partiellement hors du boîtier (2).

5. Procédé de fonctionnement d'un dispositif de fourniture d'énergie (1) selon l'une quelconque ou plusieurs des revendications précédentes destiné à fournir de l'énergie électrique à un véhicule automobile, dans lequel le dispositif de fourniture d'énergie (1) dispose d'un raccordement au réseau (3) pour le raccordement du dispositif de fourniture d'énergie (1) à un réseau de courant alternatif, au moins un premier dispositif de raccordement (4) destiné à établir une connexion électrique filaire entre le raccordement au réseau (3) et le véhicule automobile et au moins un second dispositif de raccordement (5) destiné à établir une connexion électrique sans fil entre le raccordement au réseau (3) et le véhicule automobile, dans lequel le premier dispositif de raccordement (4) et le second dispositif de raccordement (5) sont connectés au raccordement au réseau (3) par l'intermédiaire d'un dispositif redresseur commun (12), dans lequel le premier dispositif de raccordement (4) présente un raccord (6) et un câble électrique (8) connecté au raccord (6) destiné à établir la connexion filaire avec le véhicule automobile, et le second dispositif de raccordement (5) présente un onduleur (10) et un dispositif de charge sans fil (11) connecté électriquement au dispositif redresseur (12) par l'intermédiaire de l'onduleur (10), **caractérisé en ce que** le dispositif redresseur (12) présente un premier redresseur (13) et un second redresseur (14) qui sont connectés électriquement en parallèle au raccordement au réseau (3) d'une part, dans lequel le premier redresseur (13) est connecté électriquement au premier dispositif de raccordement (4) d'autre part et le second redresseur (14) est connecté électriquement au second dispositif de raccordement (5) d'autre part, et **en ce que**, au moyen d'un dispositif de commutation (15), dans un premier mode de fonctionnement du dispositif de fourniture d'énergie (1), le premier redresseur (13) est connecté électriquement au premier dispositif de raccordement (4) ainsi que séparé du second dispositif de raccordement (5) et le second redresseur (14) est connecté électriquement au second dispositif de raccordement (5) ainsi que séparé du premier dispositif de raccordement (4) et, dans un second mode de fonctionnement du dispositif de fourniture d'énergie (1), le premier redresseur (13) et le second redresseur (14) sont connectés électriquement en parallèle et respectivement connectés électriquement au premier dispositif de raccordement (4) et au second dispositif de raccordement (5).
